# EUROPÄISCHE PATENTSCHRIFT

(11) **EP 1 049 731 B1**
(45) Veröffentlichungstag und Bekanntmachung des Hinweises auf die Patenterteilung: **05.11.2003**
(21) Anmeldenummer: 99901589.4
(22) Anmeldetag: 07.01.1999
(51) Int. Cl.: C08F 210/18, C08F 36/04, C08F 2/34

(54) **VERFAHREN ZUR VERMEIDUNG VON INSTABILITÄTEN BEI DER GASPHASENPOLYMERISATION VON KAUTSCHUK**
METHOD FOR AVOIDING INSTABILITIES DURING GAS PHASE POLYMERISATION OF RUBBER
PROCEDE POUR EVITER DES PHENOMENES D'INSTABILITE LORS DE LA POLYMERISATION EN PHASE GAZEUSE DU CAOUTCHOUC

(30) Priorität: 20.01.1998 DE 19801859
(43) Veröffentlichungstag der Anmeldung: 08.11.2000
(73) Patentinhaber: BAYER AG, 51368 Leverkusen (DE)
(72) Erfinder: DAUBEN, Michael, D-41468 Neuss (DE); NENTWIG, Wolfgang, D-51465 Bergisch Gladbach (DE); SCHNEIDER, Jürgen, M., D-50668 Köln (DE)
(86) Internationale Anmeldenummer: EP9900038
(87) Internationale Veröffentlichungsnummer: WO99037698

(56) Entgegenhaltungen:
- EP-A- 0 266 074
- EP-A- 0 422 452
- EP-A- 0 570 966
- EP-A- 0 697 421

## Beschreibung

Die vorliegende Erfindung betrifft ein Verfahren zur Vermeidung von Instabilitäten bei der Gasphasenpolymerisation von Kautschuk bei Einsatz von schwerflüchtigen Monomeren, dadurch gekennzeichnet, daß die schwerflüchtigen Monomeren geträgert auf einem partikelförmigen Material in den Wirbelbettreaktor eindosiert werden.

Die Polymerisation von Polyolefinen in der Gasphase ist ein seit langem bekanntes Verfahren, das bereits 1968 zum ersten Mal großtechnisch realisiert wurde (Ullmanns Encyklopädie der technischen Chemie, 4. Auflage 1980, Bd. 19, S. 186 ff).

Die eigentliche Polymerisationsreaktion findet bei diesem Verfahren in einem Wirbelbettreaktor statt, der aus einer Reaktions- und einer darüberliegenden Beruhigungszone, in der die Feststoffpartikel weitgehend von der Gasphasc getrennt werden, besteht. Die Monomeren. Additive und der Katalysator werden in die Reaktionszone eingeleitet. Zur Aufrechterhaltung eines ausreichenden Wirbelbetts wird dem Reaktor, ebenfalls von unten, ein Kreisgasstrom zugeführt. Dieser Kreisgasstrom, der im wesentlichen aus nicht umgesetzten Monomeren besteht, wird am Kopf des Reaktors wieder abgezogen, von Restpartikeln befreit, gekühlt und in den Reaktor recycliert. Das entstehende Polymerisat wird aus der Reaktionszone kontinuierlich oder semi-kontinuierlich abgezogen und weiterbehandelt.

Eines der größten Probleme bei der Polymerisation in der Gasphase ist die Dosierung schwerflüchtiger Monomere in flüssiger Form. Einerseits ist eine homogene Verteilung nur schwer zu erreichen, was zu unerwünschten Inhomogenitäten im Produkt führt, andererseits wird die Wirbelschicht durch den Eintrag der Flüssigkeit empfindlich gestört. Die wachsenden Polymerteilchen quellen durch die Zugabe des flüssigen Monomers an, was zu Agglomerationen und Verklebungen führt, die im schlimmsten Fall ein Abfahren des Reaktors erzwingen.

Eine Vielzahl von Publikationen befaßt sich mit der Zudosierung flüssiger Monomere in den Polymerisationsreaktor:

DE-A-2357848 beschreibt das Eindüsen von flüchtigen Flüssigkeiten in einen Reaktor mit Hilfe von Rückschlagklappen-Ventilen. EP-A-780404, EP-B-241947 und EP-B-089691 beschreiben den Eintrag einer Gas-Flüssigkeitsmischung in einen Gasphasen-Reaktor in verschiedenen Ausgestaltungen. EP-A-697421, WO-96/4322 und WO-96/4321 beschreiben den Eintrag einer Gas-Flüssigkeitsmischung in einen Gasphasen-Reaktor der unterhalb des Taupunktes zumindest einer der Mischungsbestandteile betrieben wird in verschiedenen Ausgestaltungen. WO-94/28032 beschreibt den Eintrag von flüchtigen Flüssigkeiten in einen Gasphasen-Reaktor zur Steigerung der Raum-Zeit-Ausbeute. WO-94/25497 und WO-94/25495 beschreiben den Eintrag von flüchtigen Flüssigkeiten in einen Gasphasen-Reaktor zur Steigerung der Raum-Zeit-Ausbeute abhängig von der Schüttdichte der Wirbelschicht in verschiedenen Ausgestaltungen.

Die Zugabe von inerten Trägermaterialien oder auch Trennmitteln ist ebenfalls in der Literatur beschrieben.

EP-A-0 570 966 und EP-A-0 697 421 offenbaren die seperate Einbringung von partikelförmige Material und flüssigen und/oder gasförmigen Monomeren.

So wird z.B. in der EP-A-0 422 452 gelehrt, die Polymerisationsreaktion in Gegenwart von 0,3-80 Gew.-% eines inerten Materials durchzuführen, das einen mittleren Partikeldurchmesser von 0,01 bis 10 µm aufweist.

Aus der EP-A-0 530 709 ist ein Verfahren zur Herstellung von klebrigen Polymeren bekannt, bei dem die Polymerisationsreaktion in Gegenwart von 0,3-80 Gew.-% eines inerten Materials durchgeführt wird, das einen mittleren Partikeldurchmesser von 0,01 bis 150 µm aufweist.

In der EP-A-0 266 074 wird vorgeschlagen die Polymerisationsreaktion lediglich in der Gegenwart von 0,005 bis 0,2 Gew.-% eines inerten pulverisierten Materials durchzuführen. Durch diese Verfahrensweise gelingt es, Polymerisationstemperaturen zu wählen, die nahe an der Erweichungstemperatur des herzustellenden Polymers liegen.

Die US-PS-5 162 463 hingegen lehrt, daß die Agglomeration der klebrigen Partikel in einem Wirbelbett vermieden werden kann, indem ein inertes Material, das mit einer Polysiloxanschicht überzogen ist, in das Wirbelbett dosiert wird.

Schließlich beschreibt die WO-97/08211 die Zugabe von Stabilisatoren in geträgerter Form.

Bei allen genannten Verfahren können durch geringste Abweichungen von der optimalen Dosierrate der Monomeren Störungen des Wirbelbettes hervorgerufen werden, die im schlimmsten Falle zum Abstellen des Reaktors führen.

Es stellt sich die Aufgabe ein Verfahren zur Vermeidung von Instabilitäten bei der Gasphasenpolymerisation von Kautschuk bei Dosierung von schwerflüchtigen Monomeren zur Verfügung zu stellen, das die Nachteile des Standes der Technik nicht aufweist.

Die Aufgabe wird erfindungsgemäß durch die Bereitstellung eines Verfahrens gelöst, bei dem die schwerflüchtigen Monomeren geträgert auf einem partikelförmigen Material in den Wirbelbettreaktor eindosiert werden.

Für den Fachmann war es völlig unerwartet, daß durch die erfindungsgemäßen geträgerten Monomeren der Einfluß von schwerflüchtigen Monomeren auf die Stabilität der Wirbelschicht minimiert wird. Ferner war es für den Fachmann nicht zu erwarten, daß mit von dem erfindungsgemäßen geträgerten Monomeren die Polymerisationsleistung (kg Produkt/h) nicht beeinflußt wird, oder sogar noch gesteigert wird.

Die erfindungsgemäßen geträgerten Monomeren können bei jeder, vorzugsweise kontinuierlichen, Gasphasenpolymerisation eingesetzt werden, bei der insbesondere schwerflüchtige Monomeren eingesetzt werden.

Geeignete Monomere sind beispielsweise 1,3-Butadien, Isopren, Styrol, 2-Chlorbutadien, 5-Ethyliden-2-nobornen (EnB), 1,4-Hexadien, Dicyclopentadien, Vinylnorbornen, Norbornadien, Acrylnitril, Malonsäureester, Vinylacetat, Acrylsäureester, Methacrylsäureester, sowie weitere Olefine, Diene oder Triene.

Die Verwendung der erfindungsgemäßen geträgerten Monomeren kann in Kombination mit weiteren gasförmigen Monomeren und/oder nur mit inerten Gasen, wie z.B. Stickstoff, Argon, Krypton erfolgen.

Die Verwendung der erfindungsgemäßen geträgerten Monomeren kann in Kombination mit jedem beliebigen Wirbelbettreaktor erfolgen. Vorzugsweise wird jedoch ein Wirbelbettrcaktor zur Herstellung von insbesondere Kautschuk in der Gasphase eingesetzt, dessen Wandung im unteren Teil als ein Zylinder und daran anschließend als sich kontinuierlich öffnender Konus geformt ist, wobei der Winkel des Konus bezogen auf die Mittelachse 2-10° beträgt und das Wirbelbett höher als der zylindrische Teil ist.

Die Erfindung betrifft weiterhin ein Verfahren zur Vermeidung von Instabilitäten bei der Gasphasenpolymerisation von Kautschuk bei Einsatz von schwerflüchtigen Monomeren wobei die schwerflüchtigen Monomeren geträgert auf einem partikelförmigen Material in den Wirbelbettreaktor eindosiert werden, dadurch gekennzeichnet, dass die geträgerten Monomeren in Mengen zwischen 0,1 und 100 Massenprozent bezogen auf die Fest-, bwz. Wirbelbettmenge eingesetzt werden.

Die Erfindung betrifft weiterhin ein Verfahren gemäss einem oder mehreren der Ansprüche 1-14, dadurch gekennzeichnet, dass eine Mischung aus zwei, drei, vier oder mehreren Monomeren geträgert wird, welche auch separat geträgert sein können.

Sowohl die Zugabe der geträgerten Monomeren als auch die Lagerung dieser erfolgen vorzugsweise unter einem Incrtgasschleier.

Als anorganische Träger eignen sich insbesondere Silicagele, Fällungskieselsäuren, Tone, Alumosilikate, Talkum, Zeolithe, Ruß, anorganische Oxide, wie Siliciumdioxid. Aluminiumoxid, Magnesiumoxid, Titandioxid, Siliciumcarbid. Bevorzugt sind Silicagele, Fällungskieselsäuren, Zeolithe und Ruß, besonders bevorzugt Fällungskieselsäuren und Ruß. Unter inert wird in diesem Fall verstanden, daß die Feststoffe so beschaffen sind, bzw. durch eine Vorbehandlung, wie z.B. Kalzinieren, so vorbehandelt werden, daß die reaktive Oberfläche die Bildung eines aktiven Katalysators nicht behindert, bzw. mit den Monomeren reagiert.

Die genannten anorganischen Feststoffe, die der obengenannten Spezifikation genügen und deshalb für den Einsatz geeignet sind, werden beispielsweise näher beschrieben in Ullmanns, Enzyclopädie der technischen Chemie, Band 21, S. 439 ff. (Silicagele), Band 23, S. 311 ff. (Tone), Band 14, S. 633 ff. (Ruße), Band 24, S 575 ff. und Band 17, S. 9 ff. (Zeolithe).

Die anorganischen Feststoffe können einzeln oder im Gemisch untereinander eingesetzt werden.

Als organische Feststoffe eignen sich ebenfalls polymere Materialien, bevorzugt in Form frei fließender Pulver, die so beschaffen sind, bzw. durch eine Vorbehandlung, wie z.B. Trocknen, so vorbehandelt werden, daß die reaktive Oberfläche die Bildung eines aktiven Katalysator nicht behindert, bzw. mit den Monomeren reagiert, eine Korngröße im Bereich von 10 bis 1000 µm und die ein Porenvolumen im Bereich von 0,3 bis 15 ml/g aufweisen. Ein Beispiel für ein derartiges Material ist pulverförmiges Polypropylen.

Die erfindungsgemäß als Träger cinsetzbaren Materialien sind vorzugsweise bezüglich der Polymerisationsreaktion inert. Es werden teilchenförmige, anorganische oder organische Feststoffe mit einer spezifischen Oberfläche größer als 10, bevorzugt 10 bis 1 000 m²/g (BET) und einem Porenvolumen von 0,3 bis 15 ml/g, bevorzugt von 0,5 bis 5 ml/g eingesetzt. Bei der Verwendung von Rußen wird zusätzlich zum Porenvolumen die DBP-Adsorption als Eignungskriterium herangezogen. Diese soll zwischen 10 bis 300 ml/100 g liegen, bevorzugt zwischen 60 bis 150 ml/100 g, besonders bevorzugt zwischen 90 und 130 ml/100 g. Erfindungsgemäß wird ganz besonders bevorzugt als Trägermaterial Silica und/oder Ruß mit einer Partikelgröße D (v; 0,5) von 150-200 µm und einer Oberfläche von 150-250 m²/g eingesetzt. Hierbei werden die Oberflächen nach der BET-Methode und die Partikelgrößen mit Hilfe eines Mastersizers (Prinzip: Fraunhofersche Beugung) bestimmt. Die Partikelgröße D (v; 0,5) gibt die Partikelgröße an, die 50-Vol.% des partikelförmigen Materials unterschreiten.

Die spezifische Oberfläche (BET) wird in üblicher Weise bestimmt nach S. Brunauer, P.H. Emmet und Teller, J. Anorg. Chem.Soc. 60 (2), 309 (1938), das Porenvolumen wird bestimmt durch die Zentrifugationsmethode nach M. McDaniel., J.Colloid Interface Sci. 78, 31 (1980) und die DBP-Adsorption nach DIN 53 601.

Vorzugsweise sind die Trägermaterialien kugel-, plättchen- oder nadelförmig.

Vorzugsweise werden die Trägermaterialien vor deren Verwendung als Träger für die erfindungsgemäßen geträgerten Monomeren von Sauerstoff und Feuchtigkeit befreit und unter einem Inertgasschleier gelagert. Die Entfernung des Sauerstoffs und der Feuchtigkeit kann durch Reinigung mit Stickstoff und unter Wärmezuführ gemäß den bekannten Methoden erfolgen.

Das erfindungsgcmäße Verfahren eignet sich zur Vermeidung von Instabilitäten bei der Dosierung von schwerflüchtigen Monomeren bei der Herstellung von Kautschuken jeglicher Art in der Gasphase.

Polymere im Sinne der Erfindung sind z.B. Poly-α-Olefine, Polyisopren, Polystyrol, SBR, IIR, Polyisobuten, Polychloropren, Silikone und Copolymere aus Ethylen und einem oder mehrerer der folgenden Verbindungen: Acrylnitril, Malonsäureester, Vinylacetat, Acryl- und Methacrylsäurester, Vinylacetat, Acryl- und Methacrylsäureester, α-Olefine, Diene und Triene.

Kautschuke im Sinne der Erfindung sind unvernetzte, aber vernetzbare Polymere, die durch die Vernetzung in den gummielastischen Zustand überführt werden können.

Vorzugsweise wird das erfindungsgemäße Verfahren jedoch zur Vermeidung von Instabilitäten bei Dosierung von schwerflüchtigen Monomeren bei der Herstellung von EPDM in der Gasphase eingesetzt.

Die Herstellung der erfindungsgemäßen geträgerten Monomeren wird durchgeführt, indem eine Lösung des oder der schwerflüchtigen Monomeren auf den teilchenförmigen Träger aufgetragen wird. In einer weiteren bevorzugten Ausführungsform werden die reinen Monomeren geträgert.

Vorzugsweise vor, während und ggf. nach dem Auftragen der Monomeren und/oder Monomerenlösung wird der Feststoff bewegt, z. B. in einem Rührkessel mit einem konventionellen Rühraggregat, wie z. B. einem Kreuzbalkenrührer oder einem Wendelrührer, oder in einer weitereren bevorzugten Form in einem Pflugscharmischer.

Die Imprägnierung des Trägermaterials mit den Monomeren und/oder der Monomerenlösung kann auch in einem Wirbelbett erfolgen. Dabei wird auf das Trägermaterial, das durch einen Inertgasstrom fluidisiert wird, der Wirkstoff und/oder die Wirkstofflösung aufgebracht, z.B. durch Versprühen mittels einer Düse. Über einen internen Kreislauf kann das Inertgas, evtl. nachdem es von mittransportiertem Lösungsmittel befreit wurde, in den Reaktor zurückgeführt werden. Das inerte Lösungsmittel kann zur Zubereitung der Wirkstofflösung wiederverwendet werden.

Da die spätere Polymerisation durch Luft und/oder Feuchtigkeit gestört werden kann, ist es vorteilhaft, das Feststoffpulver vor dem Auftragen der Monomeren und/oder Monomerenlösung zu trocknen, die Luft zu entfernen und unter einer Inertgasatmosphäre vor, während und nach dem der Monomeren und/oder Monomerenlösung zu halten. Das Auftragen der der Monomeren und/oder Monomerenlösung erfolgt vorzugsweise so gesteuert, daß die zugegebene, vorzugsweise verdüste, Flüssigkeit sofort vom Träger aufgenommen wird. Die Bildung von Verklumpungen und Inhomogenitäten wird somit minimiert.

Die Herstellung der erfindungsgemäßen geträgerten Monomeren kann auch kontinuierlich durchgeführt werden.

Vorzugsweise sollte nur soviel Flüssigkeit auf den Feststoff aufgetragen werden, wie dieser aufnehmen kann. Das Feststoffpulver kann somit als frei fließendes Pulver nach dem Auftragen der Flüssigkeit weiterhin leicht gerührt und bewegt werden.

Im Prinzip ist es zwar möglich, die Menge des evtl. eingesetzten inerten Lösungsmittels in weiten Grenzen zu variieren. Wie dargestellt wird aber aus ökologischen und ökonomischen Gründen die Menge möglichst gering gehalten. Die Menge richtet sich nach der Menge und den rheologischen Eigenschaften des Monomeren sowie dem Porenvolumen des Trägers. Bevorzugt wird eine Menge von 10 bis 2 000 Teilen des Lösungsmittels, bezogen auf 100 Teile des Trägers, eingesetzt.

Die Herstellung des geträgerten Monomeren kann in einem weiten Temperaturbereich erfolgen. Im allgemeinen liegt die Temperatur zwischen Schmelz- und Siedepunkt der Monomeren bzw. des inerten Lösungsmittels. Üblicherweise wird bei Temperaturen von -20 bis 200°C, vorzugsweise 20 bis 100°C, gearbeitet.

Im Anschluß an die Imprägnierung des Trägermaterials mit Wirkstofflösung wird in einer bevorzugten Ausführungsform das inerte Lösungsmittel destillativ entfernt. Die Destillation kann sowohl in dem gleichen Behälter, in dem auch die Imprägnierung durchgeführt wurde, als auch in einer separaten Apparatur, z.B. einem Wirbelschichttrockner erfolgen. Bei der Entfernung des Lösungsmittels muß der Zutritt von Luft und Feuchtigkeit vermieden werden. Die Destillation wird je nach verwendetem Lösungsmittel bei Temperaturen von 0 bis 150°C, vorzugsweise bei 10 bis 80°C, und Drücken von 0,001 mbar bis 20 bar absolut, vorzugsweise 0,001 mbar bis Normaldruck durchgeführt. Die Destillation kann auch kontinuierlich durchgeführt werden. Das unter Inertbedingungen aufgefangene Kondensat kann ohne weitere Aufarbeitung als Lösungsmittel für die in der Imprägnierung eingesetzten Wirkstoffe wiederverwendet werden.

In einer weiteren bevorzugten Ausführungsform wird das inerte Lösungsmittel nicht oder nur teilweise entfernt.

In einer weiteren bevorzugten Ausführungsform wird reines Monomeres geträgert.

Desweiteren ist es möglich, durch Einstellen des Verhältnisses der zudosierten Menge an geträgerten Monomeren oder der Belegung des Trägers mit schwerflüchtigen Monomeren zu den eingesetzten Katalysatoren das Wirksamkeitsniveau des Katalysatorsystems in der Wirbelschicht zu steuern.

Die Polymerisation unter Verwendung der erfindungsgemäßen geträgerten Monomeren erfolgt, indem man die sonstigen gasförmigen Monomeren mit einem dem durchschnittlichen Fachmann bekannten Katalysatorsystem sowie den erfindungsgemäßen geträgerten Monomeren in Berührung bringt. Den gasförmigen Monomeren können weitere Gase zugemischt werden, die entweder der Verdünnung bzw. der Wärmeabführung oder der Regelung des Molekulargewichtes dienen. Die Polymerisation kann bei Drücken von 1mbar bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder für eine Gasphasenpolymerisation geeigneten Apparatur bewerkstelligt werden. So kann z. B. ein Rührreaktor, ein Drehreaktor oder ein Fließbettreaktor oder eine Kombination dieser Reaktortypen verwendet werden.

### Beispiele

### Beispiel 1

Trägerung von 5-Ethyliden-2-norbomen (ENB) auf Zeosil® Zeosil® ist ein Handelsprodukt der Rhone-Poulenc Inc., USA, und ist eine gefüllte Kieselsäure.

In einem 2 1-Einhalskolben eines Rotationsverdampfers wurden 15,8 g getrocknetes und inertisiertes Zeosil 1165 MP unter Stickstoffüberlagerung vorgelegt. Anschließend wurden 13,0 g einer hexanischen ENB-Lösung (60 %ig) unter Stickstoff zugegeben. Diese Suspension wurde 2 h am Rotationsverdampfer gerührt. Anschließend wurde das überschüssige n-Hexan abdestilliert bis wieder ein fließfähiges Pulver vorlag.
Ausbeute: 23,0 g.

### Beispiel 2

### Polymerisation von Ethylen, Propylen und ENB

Die Polymerisation wurde in einem 2,51 Stahlreaktor ausgerüstet mit einem Wendelrührer, der für die Polymerisation im Festbett geeignet ist, durchgeführt. Über eine automatische Meßdatenerfassung konnte die Reaktion im Reaktor verfolgt werden. In den gründlich ausgeheizten und mit Stickstoff inertisierten Reaktor wurde über eine Schleuse im Stickstoffgegenstrom das inerte und wasserfreie Startbett (200 g PE-Pulver eingefüllt. Bei einer Rührerdrehzahl von 200 Umdrehungen pro Minute wurde der Reaktorinhalt auf 50°C aufgeheizt und anschließend die vorgesehene Katalysatormenge mit Stickstoff über die Schleuse in den Reaktor gedrückt. Anschließend wurde die Gasphasenzusammensetzung eingestellt:
Partialdrücke: 0,8 bar Stickstoff, 1,2 bar Propen, 4,0 bar Ethen
Gesamtdruck: 6,0 bar
Abhängig vom Gesamtreaktordruck wurde im Verlauf der Reaktion das verbrauchte Monomer automatisch nachdosiert. Die Reaktion wurde nach 2,7 Stunden durch Entspannen des Reaktordruckes und spülen mit Stickstoff beendet.

Als Katalysator wurde Ethylen-bis-tetrahydroindenylzirkonocendichlorid eingesetzt. Die Katalysatormenge betrug 0,010mmol. Als Co-Katalysator wurde MAO verwendet. Das Verhältnis Al/Zr betrug 1000:1.

Das Termonomer ENB wurde aus einer Bürette als Flüssigkeit manuell in Abhängigkeit von der gebildeten Polymermenge während der Reaktion zudosiert (Ziel: 5 Gew.-% ENB im EPDM). Es wurden 30,9 g EPDM pro Stunde produziert. Die Aktivität betrug 850 g EPDM pro Stunde pro bar Monomerdruck und pro mmol Zr.

Die Zusammensetzung des entstandenen EPDM-Polymeren wurde per IR-Analyse nach der üblichen ASTM D3900 Norm bestimmt und betrug 66,5 Gew.-% Ethylen, 28,8 Gew.-% Propylen und 4,8 Gew.-% ENB.

### Beispiel 3

Es wurde analog Beispiel 2 gearbeitet. Jedoch wurde diesmal anstatt des flüssigen ENB das erfindungsgemäß geträgerte Monomer aus Beispiel 1 eingesetzt. Zudem wurde die Reaktion nach 2,1 Stunden beendet. Es wurden 66,4 g EPDM pro Stunde produziert, das Gewicht des Trägers ist hier nicht enthalten. Die Aktivität betrug 1800 g EPDM/h · bar Monomerdruck · mmol Zr. Die Zusammensetzung des entstandenen EPDM war 65,8 Gew.-% Ethylen, 29,8 Gew.-% Propylen und 4,4 Gew.-% ENB.

## Patentansprüche

1. Verfahren zur Vermeidung von Instabilitäten bei der Gasphasenpolymerisation von Kautschuk bei Einsatz von schwerflüchtigen Monomeren, **dadurch gekennzeichnet, daß** die schwerflüchtigen Monomeren geträgert auf einem partikelförmigen Material in den Wirbelbettreaktor eindosiert werden.

2. Verfahren nach Anspruch 1, **dadurch gekennzeichnet, daß** die geträgerten Monomeren in Mengen zwischen 0,1 und 100 Massenprozent bezogen auf die Fest- bzw. Wirbelbettmenge eingesetzt werden.

3. Verfahren nach Anspruch 1 bis 2, **dadurch gekennzeichnet, daß** das Trägermaterial Ruß, Aktivkohle, Silica, Ton, Talk, organische Feststoffe und/oder eine Mischung aus wenigstens zwei dieser Substanzen ist.

4. Verfahren nach Anspruch 1 bis 3, **dadurch gekennzeichnet, daß** durch das Verhältnis geträgertes Monomeres zu Katalysatorsystem das Wirksamkeitsniveau des Katalysatorsystems eingestellt wird.

5. Verfahren nach einem oder mehreren der Ansprüche 1 bis 4, **dadurch gekennzeichnet, daß** durch das Verhältnis Monomeres zu Träger das Wirksamkeitsniveau des Katalysatorsystems eingestellt wird.

6. Verfahren nach einem oder mehreren der Ansprüche 1 bis 5, **dadurch gekennzeichnet, daß** der Träger gleichmäßig mit Monomerem belegt ist.

7. Verfahren nach einem oder mehreren der Ansprüche 1 bis 6, **dadurch gekennzeichnet, daß** ein Trägermaterial mit einer Korngröße von 10 bis 1000 µm verwendet wird.

8. Verfahren nach einem oder mehreren der Ansprüche 1 bis 7, **dadurch gekennzeichnet, daß** das inerte, partikelförmige Material kugel-, plättchen- oder nadelförmig ist.

9. Verfahren nach einem oder mehreren der Ansprüche 1 bis 8, **dadurch gekennzeichnet, daß** der Kautschuk EPDM, SBR, Polyisopren, Polyisoprenbutadien und NBR ist.

10. Verfahren nach einem oder mehreren der Ansprüche 1 bis 9, **dadurch gekennzeichnet, daß** das Dien in geträgerter Form zusammen mit Ethylen und Propylen eingesetzt wird.

11. Verfahren nach einem oder mehreren der Ansprüche 1 bis 10, **dadurch gekennzeichnet, daß** das Trägermaterial bei der Herstellung des geträgerten Monomeren zumindest während des Auftragens der Monomeren bewegt wird.

12. Verfahren nach einem oder mehreren der Ansprüche 1 bis 11, **dadurch gekennzeichnet, daß** das Trägermaterial bei der Herstellung des geträgerten Monomeren vor dem Auftragen des Monomeren getrocknet und unter einer Inertgasatmosphäre vor, während und nach dem Auftragen der Monomeren gehalten wird.

13. Verfahren nach einem oder mehreren der Ansprüche 1 bis 12, **dadurch gekennzeichnet, daß** bei der Herstellung des geträgerten Monomeren die Aufbringungsgeschwindigkeit des Monomeren oder dessen Mischung mit einer inerten Mischungskomponente so gesteuert wird, daß die zugegebene Flüssigkeit sofort vom partikelförmigen Material aufgenommen wird.

14. Verfahren nach einem oder mehreren der Ansprüche 1 bis 13, **dadurch gekennzeichnet, daß** die Herstellung des geträgerten Monomeren in einem Wirbelbettreaktor durchgeführt wird.

15. Verfahren nach einem oder mehreren der Ansprüche 1 bis 14, **dadurch gekennzeichnet, daß** eine Mischung aus zwei, drei, vier oder mehreren Monomeren geträgert wird.

16. Verfahren nach einem oder mehreren der Ansprüche 1 bis 15, **dadurch gekennzeichnet, daß** eine Mischung aus zwei, drei, vier oder mehreren jeweils separat geträgerten Monomeren eingesetzt wird.

## Claims

1. Process for the avoidance of instability during the gas phase polymerisation of rubber when using low volatility monomers, **characterised in that** the low volatility monomers are fed into the fluidised bed reactor supported on a particulate material.

2. Process according to claim 1, **characterised in that** the supported monomers are used in quantities of between 0.1 and 100 wt.%, relative to the quantity of the fixed or fluidised bed.

3. Process according to claims 1 to 2, **characterised in that** the support material is carbon black, activated carbon, silica, clay, talcum, organic solids and/or a mixture of at least two of these substances.

4. Process according to claims 1 to 3, **characterised in that** the level of activity of the catalyst system is established by the ratio of supported monomer to catalyst system.

5. Process according to one or more of claims 1 to 4, **characterised in that** the level of activity of the catalyst system is established by the ratio of monomer to support.

6. Process according to one or more of claims 1 to 5, **characterised in that** the support is uniformly coated with monomer.

7. Process according to one or more of claims 1 to 6, **characterised in that** a support material having a grain size of 10 to 1000 µm is used.

8. Process according to one or more of claims 1 to 7, **characterised in that** the inert, particulate material is of a spherical, lamellar or acicular form.

9. Process according to one or more of claims 1 to 8, **characterised in that** the rubber is EPDM, SBR, polyisoprene, polyisoprene/butadiene and NBR.

10. Process according to one or more of claims 1 to 9, **characterised in that** the diene is used in supported form together with ethylene and propylene.

11. Process according to one or more of claims 1 to 10, **characterised in that**, during production of the supported monomer, the support material is set in motion at least during application of the monomers.

12. Process according to one or more of claims 1 to 11, **characterised in that**, during production of the supported monomer, the support material is dried before application of the monomer and kept under an inert gas atmosphere, before, during and after application of the monomers.

13. Process according to one or more of claims 1 to 12, **characterised in that**, during production of the supported monomer, the rate of application of the monomer or the mixture thereof with an inert mixture component is controlled such that the added liquid is immediately absorbed by the particulate material.

14. Process according to one or more of claims 1 to 13, **characterised in that** the supported monomer is produced in a fluidised bed reactor.

15. Process according to one or more of claims 1 to 14, **characterised in that** a mixture of two, three, four or more monomers is supported.

16. Process according to one or more of claims 1 to 15, **characterised in that** a mixture of two, three, four or more monomers, each separately supported, is used.

## Revendications

1. Procédé destiné à éviter des instabilités dans la polymérisation en phase gazeuse de caoutchouc en utilisant des monomères de faible volatilité, **caractérisé en ce que** l'on introduit dans le réacteur à lit fluidisé les monomères de faible volatilité mis sur support sur un matériau en forme de particules.

2. Procédé selon la revendication 1, **caractérisé en ce que** les monomères mis sur support sont utilisés dans des quantités comprises entre 0,1 et 100 % en masse, rapportés à la quantité du lit solide respectivement fluidisé.

3. Procédé selon la revendication 1 ou 2, **caractérisé en ce que** le matériau de support est de la suie, du charbon actif, de la silice, de l'argile, de la stéatite, des matières solides organiques et/ou un mélange d'au moins deux de ces substances.

4. Procédé selon les revendications 1 à 3, **caractérisé en ce que** l'on ajuste le niveau d'efficacité du système de catalyseur par le rapport du monomère mis sur support au système de catalyseur.

5. Procédé selon l'une ou plusieurs quelconques des revendications 1 à 4, **caractérisé en ce que** l'on ajuste le niveau d'efficacité du système de catalyseur par le rapport monomère à support.

6. Procédé selon l'une ou plusieurs quelconques des revendications 1 à 5, **caractérisé en ce que** le support est uniformément revêtu de monomère.

7. Procédé selon l'une ou plusieurs quelconques des revendications 1 à 6, **caractérisé en ce que** l'on utilise un matériau de support avec une taille de grains de 10 à 1000 µm.

8. Procédé selon l'une ou plusieurs quelconques des revendications 1 à 7, **caractérisé en ce que** le matériau inerte en forme de particules est dans la forme de sphères, de petites plaquettes ou d'aiguilles.

9. Procédé selon l'une ou plusieurs quelconques des revendications 1 à 8, **caractérisé en ce que** le caoutchouc est EPDM, SBR, du polyisoprène, du polyisoprènebutadiène et du NBR.

10. Procédé selon l'une ou plusieurs quelconques des revendications 1 à 9, **caractérisé en ce que** l'on utilise le diène dans une forme mise sur support en association avec de l'éthylène et du propylène.

11. Procédé selon l'une ou plusieurs quelconques des revendications 1 à 10, **caractérisé en ce que** le matériau de support est déplacé lors de la préparation du monomère mis sur support au moins pendant l'application des monomères.

12. Procédé selon l'une ou plusieurs quelconques des revendications 1 à 11, **caractérisé en ce que** le matériau de support est séché lors de la préparation du monomère mis sur support avant l'application du monomère et est maintenu dans une atmosphère de gaz inerte avant, pendant et après l'application des monomères.

13. Procédé selon l'une ou plusieurs quelconques des revendications 1 à 12, **caractérisé en ce qu'**on règle la vitesse d'application du monomère ou du mélange de celui-ci avec un constituant de mélange inerte lors de la préparation du monomère mis sur support de telle sorte que le liquide ajouté est immédiatement fixé par le matériau en forme de particules.

14. Procédé selon l'une ou plusieurs quelconques des revendications 1 à 13, **caractérisé en ce que** l'on réalise la préparation du monomère mis sur support dans un réacteur à lit fluidisé.

15. Procédé selon l'une ou plusieurs quelconques des revendications 1 à 14, **caractérisé en ce qu'**un mélange constitué de deux, trois, quatre ou plusieurs monomères est mis sur support.

16. Procédé selon l'une ou plusieurs quelconques des revendications 1 à 15, **caractérisé en ce que** l'on utilise un mélange de deux, trois, quatre ou plusieurs monomères mis sur support à chaque fois séparément.
